**Europäisches Patentamt**

**European Patent Office**

**Office européen des brevets**

(19)

(11) Veröffentlichungsnummer: **0 104 269
B1**

(12)                        EUROPÄISCHE PATENTSCHRIFT

(45) Veröffentlichungstag der Patentschrift:
27.08.86

(51) Int. Cl.⁴: **C 08 G 59/50, B 21 D 37/20**

(21) Anmeldenummer: **82108926.5**

(22) Anmeldetag: **27.09.82**

(54) **Distanzfolie für den Formen- und Modellbau sowie ihre Verwendung.**

(43) Veröffentlichungstag der Anmeldung:
**04.04.84 Patentblatt 84/14**

(45) Bekanntmachung des Hinweises auf die Patenterteilung:
**27.08.86 Patentblatt 86/35**

(84) Benannte Vertragsstaaten:
**FR GB IT NL SE**

(56) Entgegenhaltungen:
**FR - A - 2 064 224
GB - A - 1 316 191**

(73) Patentinhaber: **CIBA-GEIGY GmbH, Oeflinger
Strasse 44, D-7867 Wehr/Baden (DE)**

(72) Erfinder: **Rampf, Rudolf, D-734 Riederich (DE)**
Erfinder: **Sollner, Erich, D-7531 Lehningen (DE)**

(74) Vertreter: **Stamm, Otto et al, Patentabteilung der
CIBA-GEIGY AG Postfach, CH-4002 Basel (CH)**

**Beschreibung**

Die Erfindung bezieht sich auf eine Distanzfolie für den Formen- und Modellbau sowie auf ihre Verwendung.

Bei der Herstellung von Pressformen, wie z.B. zum Pressen von Autokarosserieteilen, wird zunächst ein Modell mit der Oberfläche des zu pressenden Teils (Positivform) hergestellt, worauf durch Abguss von diesem Modell eine Negativform angefertigt wird. Von diesen Formen werden dann mit Hilfe einer Werkzeugmaschine, die die Oberfläche dieser Formen abtastet, die eigentlichen Pressformen hergestellt.

Bevor jedoch die Negativform von der Positivform abgegossen werden kann, ist es erforderlich, auf die Positivform einen Belag aufzubringen, der in seiner Dicke der Stärke des Bleches entspricht, das später mit den Presswerkzeugen verformt werden soll. Es ist üblich, für diesen Zweck selbstklebende Wachsfolien oder Bleifolien zu verwenden. Beide Materialien haben ganz erhebliche Nachteile. So zeigen sie beispielsweise beim Herumlegen um Ausbuchtungen die Eigenschaften, dass sie sich an den erhabenen Stellen dehnen, so dass ihre Stärke an dieser Stelle nicht mehr der Stärke des später zu pressenden Blechs entspricht. Weiterhin sind diese Materialien gegenüber mechanischen Einflüssen (Fingernagel etc.) sehr empfindlich, so dass ihre Handhabung Schwierigkeiten macht. Ein Schleifen etc. zum Glätten der Oberfläche ist bei beiden Materialien nicht möglich. Das Verspachteln von Unebenheiten und Kanten und Stössen ist nicht möglich, da eine Spachtelmasse auf Blei und ganz besonders auf Wachs nicht haftet. Dies ist aber wichtig, weil nämlich die Oberfläche der Folie vor dem Abgiessen der Negativform sauber geglättet sein muss. Darüber hinaus zeigt sich bei der Verwendung von Wachs, dass nach dem Abnehmen des Wachses Rückstände auf den Formen verbleiben, die nur mühsam zu entfernen sind.

Aufgabe der Erfindung war es, eine Distanzfolie für den Formen- und Modellbau zu schaffen, welche die vorstehend erwähnten Nachteile nicht aufweist.

Gelöst wird diese Aufgabe durch eine Distanzfolie für den Formen- und Modellbau, dadurch gekennzeichnet, dass sie durch Aushärten von 100 Gewichtsteilen eines Gemisches aus

45–60 Gewichtsteilen eines intern plastifizierten Epoxidharzes mit niedrigem Epoxidwert,

5–10 Gewichtsteilen externem Weichmacher und

35–40 Gewichtsteilen kugelig-amorphem Füllstoff mit

9–13 Gewichtsteilen eines Polyaminhärters hergestellt ist.

Die erfindungsgemässe Distanzfolie zeigt eine Reihe von bemerkenswerten Eigenschaften, die sie für den vorgesehenen Zweck eminent geeignet macht. Sie besitzt insbesondere eine hohe Formstabilität, so dass ein nachträgliches Verziehen nicht möglich ist. In elastischer Hinsicht ist die Folie praktisch völlig tot. Das bedeutet, dass sie auch in Hohlkehlen weitgehend radienstabil ist. Sie ist gegenüber mechanischen Einflüssen weitgehend unempfindlich, so dass bei ihrer Handhabung auch nach dem Aufbringen auf die Positivform keine Schwierigkeiten auftreten. Die Oberfläche ist gut durch Schleifen etc. bearbeitbar, was zum Abarbeiten von Kanten und Stössen besonders wichtig ist. Übliche Spachtelmassen haften vorzüglich auf der Folie, so dass die Herstellung glatter Oberflächen keine Schwierigkeiten macht. Die Trennwirkung bei der Herstellung eines Abgusses ist ausgezeichnet. Ausserdem sind beim Abnehmen der Folie auf der Positivform keinerlei Rückstände festzustellen.

Gemäss der Erfindung verwendbare Epoxidharze besitzen einen niedrigen Epoxidwert, d.h. einen Wert, der im unteren Bereich der handelsüblichen Epoxidharze liegt. Werte von 0,25 bis 0,35 haben sich als gut brauchbar erwiesen. Die Epoxidharze sind in üblicher Weise intern plastifiziert. Ein brauchbares Produkt wird von der Reichhold Chemie unter der Bezeichnung «Bekkopox»® EP 151 vertrieben. Bei dem externen Weichmacher kann es sich um einen üblichen Weichmacher, wie z.B. Trioctylphosphat, handeln. Die Firma Bayer AG vertreibt ein geeignetes Produkt unter Bezeichnung «Disflamol»® TOF.

Der verwendete Füllstoff soll kugelig-amorph sein. Die Bezeichnung «kugelig» ist nicht in streng mathematischem Sinne zu verstehen. Gemeint ist damit das Fehlen von Kanten und Spitzen bei den Füllstoffteilchen. Auch der Ausdruck «amorph» sollte nicht unbedingt in streng wissenschaftlichem Sinne verstanden werden. Ein Kristallgefüge kann so lange toleriert werden, als sich der Füllstoff ähnlich einem amorphen Stoff verhält. Besonders brauchbar hat sich Kreide erwiesen. Es hat sich gezeigt, dass der Füllstoff die angegebenen Eigenschaften aufweisen soll, damit die Folie das für die vorgesehene Verwendung notwendige neutrale Verhalten zeigt und dass sie leicht oberflächlich bearbeitet werden kann.

Die Masse ist mit einem Polyaminhärter ausgehärtet. Vorzüglich brauchbar hat sich das Produkt «Beckopox»® Spezialhärter EH 610 der Reichhold Chemie erwiesen. Bei diesem Härter handelt es sich nach Angaben des Herstellers um ein modifiziertes Polyamin.

Es wird bevorzugt, die Distanzfolie mit Farbstoff, beispielsweise 2–3% Farbstoff, einzufärben. Dies ermöglicht eine leichtere Kennzeichnung der fertigen Modelle und Formen.

Die Folie wird vorzugsweise mit einer nichthärtenden Klebemasse beschichtet, um das Aufbringen auf die Form bzw. das Modell zu erleichtern. Diese Klebeschicht kann durch ein Abziehpapier geschützt werden.

Das folgende Beispiel beschreibt die Herstellung einer erfindungsgemässen Distanzfolie.

Ein Vorgemisch aus den folgenden Bestandteilen wird hergestellt:

Intern plastifiziertes Epoxidharz mit niedrigem Epoxidwert, z.B. «Beckopox» EP 151          52,00 Gewichtsteile

Trioctylphosphat, z.B.
«Disflamol» TOF      7,00 Gewichtsteile
Fein gemahlene Kreide      38,95 Gewichtsteile
Farbstoff, z.B. rotes
Eisenoxid      2,05 Gewichtsteile
     100,00 Gewichtsteile

100 Gewichtsteile dieses Gemischs werden mit 11,0 Gewichtsteilen Polyaminhärter, z.B. «Beckopox» Spezialhärter EH 610, gemischt. Das Gemisch wird hierauf in eine entsprechende Form gegossen und thermisch bei 60 °C ausgehärtet. Die erhaltene Distanzfolie wird einseitig mit einem Haftkleber (Klebefolie), der durch ein Abziehpapier geschützt ist, versehen.

## Patentansprüche

1. Distanzfolie für den Formen- und Modellbau, dadurch gekennzeichnet, dass sie durch Aushärten von 100 Gewichtsteilen eines Gemisches aus
45–60 Gewichtsteilen eines intern plastifzierten Epoxidharzes mit niedrigem Epoxidwert,
5–10 Gewichtsteilen externem Weichmacher und
34–45 Gewichtsteilen kugelig-amorphem Füllstoff mit
9–13 Gewichtsteilen eines Polyaminhärters hergestellt ist.

2. Distanzfolie nach Anspruch 1, dadurch gekennzeichnet, dass sie mit 2–3% Farbstoff eingefärbt ist.

3. Distanzfolie nach Anspruch 1 oder 2, dadurch gekennzeichnet, dass sie einseitig mit einem Haftkleber beschichtet ist.

4. Verwendung einer Distanzfolie nach Anspruch 1 zur Herstellung von Abgüssen beim Formen- und Modellbau.

## Revendications

1. Feuille d'écartement pour la fabrication de moules et de modèles, caractérisée en ce qu'elle est obtenue par durcissement de 100 parties en poids d'un mélange comprenant
45–60 parties en poids d'une résine époxyde à plastification interne et à faible indice d'époxyde,
5–10 parties en poids d'un plastifiant externe, et
35–45 parties en poids d'une charge amorphe-sphérique,
avec 9–13 parties en poids d'un durcisseur polyamine.

2. Feuille d'écartement selon la revendication 1, caractérisée en ce qu'elle est colorée par 2–3% d'un colorant.

3. Feuille d'écartement selon l'une des revendications 1 ou 2, caractérisée en ce qu'elle est enduite sur un côté d'un adhésif de contact.

4. Utilisation d'une feuille d'écartement selon la revendication 1 pour la préparation de moulages lors de la fabrication de moules et de modèles.

## Claims

1. Spacer foil for mould and pattern construction, characterised in that it is produced by hardening 100 parts by weight of a mixture of
45–60 parts by weight of an internally plasticized epoxy resin of low epoxide value,
5–10 parts by weight of an external plasticizer and
35–45 parts by weight of spherical-amorphous filling material with
9–13 parts by weight of a polyamine hardener.

2. Spacer foil according to claim 1, characterised in that it is coloured with 2–3% colouring material.

3. Spacer foil according to claim 1 or 2, characterised in that it is covered on the one side with an adhesive glue.

4. Use of a spacer foil according to any one of the preceding claims for the production of castings in mould and pattern construction.